# EUROPEAN PATENT APPLICATION

(11) **EP 3 249 173 A1**
(43) Date of publication of application: **29.11.2017**
(21) Application number: 17172703.5
(22) Date of filing: 24.05.2017
(51) Int. Cl.: F01D 11/12, F01D 5/28

(54) **ABRASIVE COATING FOR A SUBSTRATE, TURBINE ENGINE COMPONENT AND PROCESS FOR COATING A TURBINE ENGINE AIRFOIL**

(30) Priority: 24.05.2016 US 201615162699
(71) Applicant: United Technologies Corporation, Farmington, CT 06032 (US)
(72) Inventor: Burlatsky, Sergei F., West Hartford, CT Connecticut 06117 (US); Wusatowska-Sarnek, Agnieszka M., Mansfield Ctr., CT Connecticut 06250 (US); Furrer, David Ulrich, Marlborough, CT Connecticut 06447 (US)
(74) Representative: de Bresser, Sara Jean

(57) **Abstract**

An abrasive coating (16) comprising a plurality of first grit particles (18) placed on a top surface of a substrate and spaced to provide channels (30) for the removal of cut chips and rub debris and heat reduction. A plurality of second grit particles (22) are placed between each of the first grit particles (18), and having a nominal size smaller than the first grit particles (18). A mixture of the second grit particles (22) to the first grit particles (18) comprises from about 75-98%. The second grit particles (22) form a single layer or multiple layers and comprise height of 10-60% of that of the first grit particles (18). A matrix material (20) is bonded to the top surface; the matrix material (20) envelops the second grit particles (22) and bonds to and partially surrounds the first grit particles (18). The first grit particles (18) extend above the matrix material (20) and the second grit particles (22) relative to the top surface.

## Description

### BACKGROUND

The present disclosure is directed to abrasive coating of an abradable sealing system, such as blade and vane tips within turbine engine applications. More particularly, an engineered structure comprised of a multiplicity of phases that increase strength and optimize the aggregate abrasion and abrasion resistance of specific elements of the complete abradable sealing system, by optimizing cutting loads for individual large grit particles and optimizing the strength and abrasion resistance of engineered adjacent channels between large grit particles.

Gas turbine engines and other turbomachines have rows of rotating blades and static vanes or knife-edge seals within a generally cylindrical case. To maximize engine efficiency, the leakage of the gas or other working fluid around the blade tips should be minimized. This may be achieved by designing sealing systems in which the tips rub against an abradable seal. Generally, the tip is made to be harder and more abrasive than the seal; thus, the tips will abrade or cut into the abradable seal during those portions of the engine operating cycle when they come into contact with each other.

During the operation of a gas turbine engine, it is desired to maintain minimum clearance between the tips and corresponding abradable seals as large gap results in decreased efficiency of the turbine, due to the escape of high-energy gases. However, a small gap may increase the frequency of interaction between the tips and seal. That in turn, due to the friction between the tips and seals, will lead to excessive component wear and efficiency reduction or even component distress. Since aircraft turbines experience cyclic mechanical and thermal load variations during operation their geometry varies during the different stages of the operating cycle. Active clearance control and abrasive tips are currently used to establish and maintain optimum clearance during operation. Ideally, those tips should retain their cutting capability over many operating cycles compensating for any progressive changes in turbine geometry.

During certain engine operating conditions engines have shown very high radial interaction rates (∼40"/s) between abrader tips and abradable seals that cause rapid depletion of the abrasive grit portions of the abrasive tip coating when rubbed against the abradable seals. Low incursion rates (low incursion rates (typically smaller than 1.5 mil/s for porous metallic abradables) can also result in excessive wear and damage to abradable sealing systems through the generation of large thermal excursion within the seal system (abrasive tip and abradable seal). Methods to increase the amount of cut of the abradable seal by blade can greatly reduce the damage from these conditions.

An abrasive tip is needed for enabling reduced clearance for normal running and other transient conditions that provides a higher wear ratio with abradable seal material at the high incursion rates associated with certain off-normal engine operating conditions, such as, a bird strike and surge, and extended low rate incursion conditions during extended low transient thermal or mechanical loading cycles.

### SUMMARY

In accordance with the present disclosure, there is provided an abrasive tip coating comprising an abrader tip having a top surface. A plurality of first grit particles is dispersed over the top surface of the blade tip with a specific spacing in a single layer. A plurality of second grit particles is placed between each of the plurality of first grit particles in one or more layers. The second grit particles having a nominal size smaller than the first grit particles. The first grit particles comprise 1-25% of the total particles in the mixture of grit particles. A matrix material is bonded to the top surface. The matrix material envelopes the second grit particles that are in one or more distinct layers. The matrix material is also bonded to and partially surrounds the first grit particles, wherein the first grit particles extend above the matrix material and the second grit particles relative to the top surface. The height of the secondary grit particles is 10-60% of that of the first grit particles relative to the top of the tip component.

In accordance with the present disclosure, there is provided an abrasive coating for a substrate, comprising:
a plurality of first grit particles adapted to be placed on a top surface of said substrate, wherein said plurality of first grit particles are spaced to provide channels for at least one of the removal of cut chips and rub debris and the reduction of heat generation;
a plurality of second grit particles placed between each of said plurality of first grit particles, said second grit particles having a nominal size smaller than said first grit particles, wherein a mixture of said second grit particles to said first grit particles comprises from about 75-98% of said mixture of particles wherein said plurality of second grit particles are configured in a single layer or multiple layers wherein said plurality of second grit particles comprise a total combined height of 10 to 60% of that of the first grit particles, and
a matrix material bonded to said top surface; said matrix material envelops said second grit particles and said matrix material bonds to and partially surrounds said first grit particles, wherein said first grit particles extend above said matrix material and said second grit particles relative to said top surface.

In an exemplary embodiment, the coating further comprises an adhesion layer coupled to said top surface, wherein said adhesion layer is configured to adhere said first grit particles to said top surface.

In another exemplary embodiment, a gas turbine engine component comprises an airfoil portion or vane or abrader element of a clearance sealing system having a tip; a composite abrasive coating (e.g. a coating as herein described) bonded to the tip; the composite abrasive coating comprises an adhesion layer bonded to the tip. A layer of first grit particles with controlled spacing is bonded to the adhesion layer. A plurality of second grit particles in one or more layers are dispersed between the first grit particles, the second grit particles being smaller than the first grit particles, wherein the second grit particles are enveloped in a matrix material surrounding an unexposed portion of the first grit particles. The first grit particles comprise 1-25% of the total particles in the mixture of grit particles. The matrix material is coupled to the adhesion layer.

In accordance with the present disclosure, there is provided a turbine engine component comprising:
an airfoil having a tip;
a composite abrasive coating (e.g. a coating as herein described) bonded to said tip;
said composite abrasive coating comprising an adhesion layer bonded to said tip;
a layer of first grit particles bonded to said adhesion layer;
a plurality of second grit particles dispersed around said first grit particles, said second grit particles being smaller than said first grit particles, wherein a mixture of said second grit particles to said first grit particles comprises from about 75% to about 98% of the total number of particles; and
said second grit particles enveloped in a matrix material surrounding an unexposed portion of said first grit particles; said matrix material coupled to said adhesion layer.

In an exemplary embodiment, the first grit particles comprise a cubic boron nitride material, but could be other hard abrasive grit particles such as alumina, silicon nitride, or silicon carbide.

In an exemplary embodiment, said first grit particles comprise a cubic boron nitride material, coated silicon carbide (SiC), or another hard ceramic phase.

In an exemplary embodiment, said matrix material comprises a matrix formed from at least one of Ni, Co and MCrAlY, wherein M is Ni or Co.

In an exemplary embodiment, said second grit particles are selected from the group consisting of alumina, silicon nitride, cubic boron nitride.

In an exemplary embodiment, said adhesion layer comprises the same material as said matrix material.

In an exemplary embodiment, said second grit particles are about one tenth of the nominal size of the first grit particles.

In an exemplary embodiment, said first grit particles are sized from about 0.04 to about 1.00 millimeters.

In an exemplary embodiment, said second grit particles are sized from 0.004 to about 0.1 millimeters.

In an exemplary embodiment, a diameter of said first grit particles are 10 to 1 the size of a diameter of said second grit particles.

In an exemplary embodiment, said matrix material and said second grit particles are configured to distribute a cutting load from individual highly loaded first grit particles to adjacent first grit particles, thereby reducing stress at the matrix material.

In an exemplary embodiment, each one of said first grit particles are configured with grit spacing configured to protect said matrix material from wear by an abradable rub.

In an exemplary embodiment, at least one channel is formed between said first grit particles, said channels having a width of 1 -3 diameters of said first grit particles.

In an exemplary embodiment, said channel is located between said first grit particles that are about 40-90 percent recessed below a total height of said first grit particles.

In an exemplary embodiment, said channel comprises a composite of said matrix material and said second grit particles.

In an exemplary embodiment, said channel comprises a composite having a strength and abrasion resistance greater than a strength and abrasion of said matrix alone, said channel configured to provide support and bonding strength for said first grit particles.

In an exemplary embodiment, the matrix material comprises a matrix formed from Ni, Low Alloyed Nickel material or MCrAlY, wherein M is Ni or Co.

In an exemplary embodiment, the second grit particles are selected from the group consisting of alumina, silicon nitride, cubic boron nitride or other hard abrasive grit particles.

In an exemplary embodiment, an adhesion layer is coupled to the top surface of the tip base material, wherein the adhesion layer is configured to adhere the first grit particles to the top layer in a controlled spacing.

In an exemplary embodiment, the adhesion layer comprises the same material as the matrix material.

In an exemplary embodiment, the matrix material and the first and the second grit particles combine to produce a composite strength and abrasive capability greater than the matrix material alone.

In another exemplary embodiment, a gas turbine engine component comprises an airfoil portion or vane or abrader element of a clearance sealing system having a tip; a composite abrasive coating (e.g. a coating as herein described) bonded to the tip; the composite abrasive coating comprises an adhesion layer bonded to the tip. A layer of first grit particles with controlled spacing is bonded to the adhesion layer. A plurality of second grit particles in one or more layers are dispersed between the first grit particles, the second grit particles being smaller than the first grit particles, wherein the second grit particles are enveloped in a matrix material surrounding an unexposed portion of the first grit particles. The first grit particles comprise 1-25% of the total particles in the mixture of grit particles. The matrix material is coupled to the adhesion layer.

In an exemplary embodiment, the first grit particles are sized from about 0.04 to about 1.00 millimeters.

In an exemplary embodiment, the second grit particles are sized from 0.004 to about 0.1 millimeters.

In an exemplary embodiment, the ratio of size (e.g. diameter) of the first grit particle size to the second grit particle size is 10-to-1. In an exemplary embodiment, each one of the first grit particles are configured with a grit spacing that is the linear length of 1 to 3 first grit diameters to produce sufficient spacing to produce channels for cut chips and debris to pass during the cutting process.

In an exemplary embodiment the spacing of second grit particles on one or more total layers between the first grit particles is defined by the ratio of first and second particle quantities.

In an exemplary embodiment, the turbine engine component is a blade, a single blade or a part of the integrated bladed rotor (sometimes referred to as a blisk).

In another exemplary embodiment, a process for coating a turbine engine blade with an abrasive (e.g. a coating as herein described) comprises applying an adhesion layer onto a tip of said component; adhering a plurality of first grit particles to the adhesion layer, wherein narrow spaces are formed between the first grit particles; placing within the narrow spaces between the first grit particles are a plurality of second grit particles. The first grit particles comprise 1-25% of the total particles in the mixture of grit particles. Matrix material is applied that can envelope the second grit particles with a matrix material; surrounding each of the first grit particles with the matrix material exposing a portion of the first grit particles above the matrix material and the second grit particles.

The present disclosure also provides a process for coating a turbine engine airfoil with an abrasive (e.g. a coating as herein described), said process comprising:
applying an adhesion layer onto a tip of said airfoil;
adhering a plurality of first grit particles to said adhesion layer, wherein spaces are formed between said first grit particles;
filling said spaces between said first grit particles with a plurality of second grit particles, wherein said second grit particles are smaller than the first grit particles, wherein a mixture of said second grit particles to said first grit particles comprises from about 75% to about 98% of said mixture of particles;
enveloping said second grit particles with a matrix material; and
surrounding each of said first grit particles with said matrix material exposing a portion of said first grit particles above said matrix material and said second grit particles.

In an exemplary embodiment, the process further comprises spacing the first grit particles apart, wherein the spacing is configured to protect the matrix material from wear by an abradable rub, and/or provide optimal channels to enable removal of cut chips and debris from the cutting process.

In an exemplary embodiment, the process further comprises distributing a cutting load to individual first grit particles, thereby increasing the cutting force and effectiveness of the first grit particles.

In an exemplary embodiment, the matrix material and the second grit particles combined comprise an effective composite strength and abrasion resistance greater than said matrix material alone.

In an exemplary embodiment, the process further comprises applying a base layer to the blade tip prior to applying the adhesion layer.

In an exemplary embodiment, the process comprises spacing said first grit particles apart, wherein said spacing is configured to protect said matrix material from wear by an abradable rub.

In an exemplary embodiment, the process comprises distributing a cutting load from individual highly loaded first grit particles to adjacent first grit particles, thereby reducing stress at the matrix composite material.

In an exemplary embodiment, said matrix material and said second grit particles combined comprise a strength and abrasion resistance greater than said matrix material alone.

In an exemplary embodiment, the process comprises applying a base layer to said blade tip prior to applying said adhesion layer.

Other details of the abrasive blade tip coating are set forth in the following detailed description and the accompanying drawing wherein like reference numerals depict like elements.

### BRIEF DESCRIPTION OF THE DRAWINGS

FIG. 1 is a schematic representation of abrasive composite coating applied to a tip of a turbine engine component; and
FIG. 2 is a schematic cross-sectional view of the exemplary abrasive blade tip coating.

### DETAILED DESCRIPTION

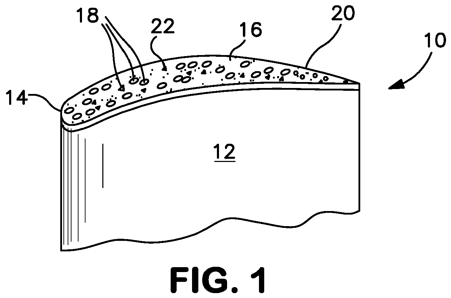

Referring now to FIG. 1 there is illustrated a turbine engine component 10, such as a compressor blade or vane. The blade 10 has an airfoil portion 12 with a tip 14. The tip 14 has an abrasive coating 16 applied to it. The abrasive coating 16 comprises a composite material that includes an abrasive particulate/grit or simply first grit 18, such as cubic boron nitride (CBN), coated silicon carbide (SiC), or another hard ceramic phase. The grit 18 can be sized as a coarse grit. In an exemplary embodiment the grit 18 can be sized from about 40 to about 1000 microns. The first grit 18 is embedded in a plating, vapor deposited or other type layer matrix composite 20. The matrix 20 comprises a suitable oxidation-resistant alloy matrix. In an exemplary embedment the layer comprises a matrix formed from Ni, Co, or MCrAlY, the M standing for either Ni or Co or both. In an exemplary embodiment, the matrix 20 can comprise pure nickel, nickel alloy, copper, copper alloy, cobalt, cobalt alloy, chrome or other alloys. A second grit 22 is interspersed between the first grit 18. The second grit 22 is a smaller sized particle than the larger first grit material 18. In an exemplary embodiment, the second grit 22 is sized to about 1/10 the size of the first grit 18. The second grit 22 can be from about 5% to about 20% of the diameter of the first grit 18. The second grit 22 may be Al₂O₃ (alumina), Si₃N₄ (silicon nitride), CBN (cubic boron nitride), or other similar abrasive particles. The percentage of particles within the mixture should range from 2% to 25% of first grit 18 to second grit 22 particles. Second grit particles range from about 75% to about 98% of the total number of particles.

Second grit 22 are placed within the plating layer 20 in one or more layer, to produce a total height from the base tip material that is 10-60% of the height of the first grit 18. First grit particles 18 are 40%-90% recessed below the height of the first grit particle total height. The resulting blade tip 14 with abrasive coating 16 is particularly well suited for rubbing metal as well as ceramic abradable seals (not shown).

The turbine engine component/blade 10 may be formed from a titanium-based, nickel-based, iron-base, or other alloy. In an exemplary embodiment, the blade 10 includes a (Ti) titanium-based alloy.

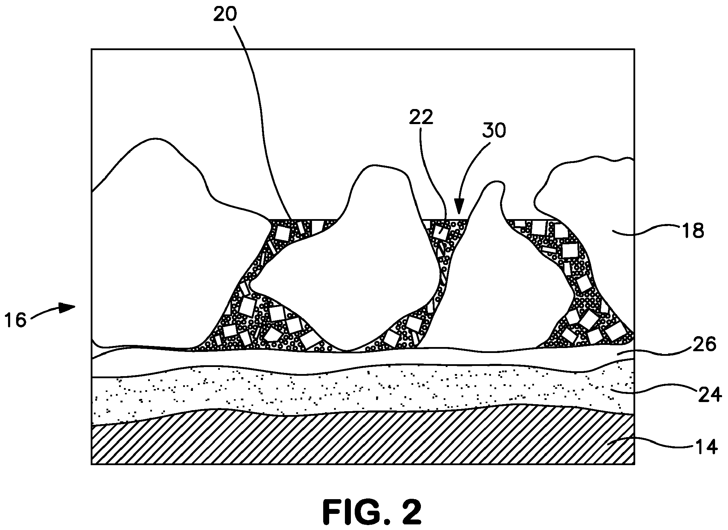

Referring to FIG. 2 an exemplary abrasive coating 16 is shown. The abrasive coating 16 includes the large first grit particles 18 and relatively smaller second grit particles 22 interspersed throughout the matrix 20, but typically in the range of 10 to 1 diameter ratio.

In an exemplary embodiment, the first grit particles 18 range in size from about 0.04 to about 1.00 millimeters (mm) nominally. First grit 18 particle sizes can range up to about 1.00 mm nominally.

This abrasion protection thus, enables greater first grit 18 retention by maintaining support from the matrix composite material 20.

In alternative embodiments, the large grit particles 18 can comprise hard materials. In an exemplary embodiment, the grit 18 can comprise: zirconia, aluminum di-boride, aluminum nitride, aluminum nitride-carbon, diamond or other engineered grit particles. In an exemplary embodiment, the second grit 22 can range in size from about 0.004 to about 0.10 mm nominally. The second grit particles 22 can comprise the same material as the larger grit particles 18. Other materials can be employed for the small grit 22. In an exemplary embodiment, the second grit particles 22 can comprise a smaller, high modulus, higher strength, and/or higher abrasion resistant material that is less costly than the first grit particle 18. Thus, the larger first grit particle 18 can be a more expensive material such as, diamond and the second grit 22 can be less expensive since, it does not perform the bulk of the cutting and instead performs the function of improving the strength of the matrix composite material and the function of spacing the first grits and also providing conduits for the chips and debris removal 20.

The smaller second grit particles 22 function to increase the strength and abrasion resistance of the matrix material 20 and support and hold the first grit particles 18 increasing the load resistance and adherence of the first grit 18.

The abrasive coating 16 can include a base layer 24 bonded to the blade tip 14. The base layer 24 can be the same material as the matrix 20. The base layer 24 can be from about 1 to about 100 microns in thickness. In an exemplary embodiment, the base layer 24 can be from about 25 to about 50 microns in thickness. The base layer 24 can be optionally applied.

An adhesion layer 26 comprising the plating, vapor deposited, brazed or other application process material utilized in the matrix 20 can be applied to the base layer 24 or can be coated directly to the blade tip 14. The adhesion layer 26 prepares the surface of the tip 14 for the first grit 18 to adhere to during application of the first grit 18. The adhesion layer 26 can comprise the same basic material as the matrix 20 or other beneficial materials that bind the first grit 18 to the blade tip 14 or alternatively the base layer 24. In an exemplary embodiment the adhesion layer 24 comprises a Ni alloy matrix material.

The exemplary abrasive coating 16 includes a portion of each first grit particle 18 projecting outward above the surface of the matrix material 20, thereby enabling favorable sliding contact (rubbing) interaction with metal or ceramic seals during engine operation. The unexposed portion of the first grit particles 18 are surrounded by matrix material 20 and second grit 22. The first grit particles 18 can be spaced apart from each other with an optimal distance of separation and arranged uniformly spaced apart. The optimal distance of separation of large grit particles can be defined by the competition between the average heat generation at the abradable surface that reduces with the distance between the grits and the force acting on the individual grit that is increasing with the distance between the grits. The optimal point depends on the material properties of the rub couple and on the incursion rate. However, for typical incursion rates (lower than 80 mils/s) and for metallic porous abradable material the optimal distance would be close to half of the blade thickness. The matrix material 20 and smaller second grit 22, as well as first grit particles 18 can be securely bonded to the blade tip 14.

The spaces between the first grit 18 should be such that the first particles are spaced at a linear length of 1 to 3 first grit diameters to produce sufficient spacing to produce channels 30 for cut chips and debris to pass during the cutting process. The first grit particles 18 are specifically spaced apart. The spacing can provide channels 30 between each first grit particle 18. Engineered abrasive resistance of the composite of second particles 22 and matrix composite material 20, which provides abrasion resistance of the recessed channels 30 between the first particles 18. The channel 30 comprises a composite having a strength and abrasion resistance greater than a strength and abrasion of the matrix 20 alone. The channel 30 can be configured to provide superior support and bonding strength for the first grit particle 18.

The combination of the smaller grit 22 blended with the matrix material 20 securely bonded and surrounding the grit particles 18 achieve a higher strength and abrasion resistance than merely having only the matrix 20 surrounding the first grit 18. The combination of smaller grit 22 and matrix 20 also provides superior support to the first grit 18.

The abrasive blade tip coating takes advantage of the characteristics of a composite structure within the channels by distributing cutting load from individual highly loaded grit particles to adjacent grit particles, thus reducing stress within the composite matrix, which holds individual grit particles. The exemplary abrasive blade tip coating demonstrates superior durability that is associated with the ability of individual grits to withstand higher loads. The principle is to create sufficient spacing between the coarse particles to increase the loading on them during the rub and therefore increase the cut-per-blade pass, which is beneficial for small incursion rates due to observed, as well as predicted by modeling, decrease of heat generation. It is also beneficial at both high and low incursion rates through providing optimal abrasion resistant channels for chips and debris to be removed, which in turn reduce the overall pressure within the rub system.

Better transfer of loads between first abrasive particles and optimal abrasion resistant channels between first particles allows individual first grits to support higher cutting loads and higher cutting time before being pulled out of the abrasive composite blade tip. Another benefit of the exemplary abrasive tip coating is that the optimum first grit spacing and application of second grit particles within the composite matrix provides better protection of the Ni matrix from wear by abraded rub debris. The exemplary abrasive composite blade tip coating enables for retention of the matrix that also relates to better first grit retention.

There has been provided an abrasive blade tip coating. While the abrasive blade tip coating has been described in the context of specific embodiments thereof, other unforeseen alternatives, modifications, and variations may become apparent to those skilled in the art having read the foregoing description. Accordingly, it is intended to embrace those alternatives, modifications, and variations that fall within the broad scope of the appended claims.

Preferred embodiments of the present disclosure are as follows:
1. An abrasive coating for a substrate, comprising:
   a plurality of first grit particles adapted to be placed on a top surface of said substrate, wherein said plurality of first grit particles are spaced to provide channels for at least one of the removal of cut chips and rub debris and the reduction of heat generation;
   a plurality of second grit particles placed between each of said plurality of first grit particles, said second grit particles having a nominal size smaller than said first grit particles, wherein a mixture of said second grit particles to said first grit particles comprises from about 75-98% of said mixture of particles wherein said plurality of second grit particles are configured in a single layer or multiple layers wherein said plurality of second grit particles comprise a total combined height of 10 to 60% of that of the first grit particles, and
   a matrix material bonded to said top surface; said matrix material envelops said second grit particles and said matrix material bonds to and partially surrounds said first grit particles, wherein said first grit particles extend above said matrix material and said second grit particles relative to said top surface.
2. The coating according to embodiment 1, wherein said first grit particles comprise a cubic boron nitride material, coated silicon carbide (SiC), or another hard ceramic phase.
3. The coating according to embodiment 1, wherein said matrix material comprises a matrix formed from at least one of Ni, Co and MCrAlY, wherein M is Ni or Co.
4. The coating according to embodiment 1, wherein said second grit particles are selected from the group consisting of alumina, silicon nitride, cubic boron nitride.
5. The coating according to embodiment 1, further comprising:
   an adhesion layer coupled to said top surface, wherein said adhesion layer is configured to adhere said first grit particles to said top surface.
6. The coating according to embodiment 5, wherein said adhesion layer comprises the same material as said matrix material.
7. The coating according to embodiment 1, wherein said second grit particles are about one tenth of the nominal size of the first grit particles.
8. A turbine engine component comprising:
   an airfoil having a tip;
   a composite abrasive coating bonded to said tip;
   said composite abrasive coating comprising an adhesion layer bonded to said tip;
   a layer of first grit particles bonded to said adhesion layer;
   a plurality of second grit particles dispersed around said first grit particles, said second grit particles being smaller than said first grit particles, wherein a mixture of said second grit particles to said first grit particles comprises from about 75% to about 98% of the total number of particles; and
   said second grit particles enveloped in a matrix material surrounding an unexposed portion of said first grit particles; said matrix material coupled to said adhesion layer.
9. The turbine engine component according to embodiment 8, wherein said first grit particles are sized from about 0.04 to about 1.00 millimeters.
10. The turbine engine component according to embodiment 8, wherein said second grit particles are sized from 0.004 to about 0.1 millimeters.
11. The turbine engine component according to embodiment 8, wherein a diameter of said first grit particles are 10 to 1 the size of a diameter of said second grit particles.
12. The turbine engine component according to embodiment 8, wherein said matrix material and said second grit particles are configured to distribute a cutting load from individual highly loaded first grit particles to adjacent first grit particles, thereby reducing stress at the matrix material.
13. The turbine engine system according to embodiment 8, wherein each one of said first grit particles are configured with grit spacing configured to protect said matrix material from wear by an abradable rub.
14. The turbine engine system according to embodiment 8, further comprising:
   at least one channel formed between said first grit particles, said channels having a width of 1 -3 diameters of said first grit particles.
15. The turbine engine system according to embodiment 14,wherein said channel is located between said first grit particles that are about 40-90 percent recessed below a total height of said first grit particles.
16. The turbine engine system according to embodiment 14, wherein said channel comprises a composite of said matrix material and said second grit particles.
17. The turbine engine system according to embodiment 14, wherein said channel comprises a composite having a strength and abrasion resistance greater than a strength and abrasion of said matrix alone, said channel configured to provide support and bonding strength for said first grit particles.
18. A process for coating a turbine engine airfoil with an abrasive, said process comprising:
   applying an adhesion layer onto a tip of said airfoil;
   adhering a plurality of first grit particles to said adhesion layer, wherein spaces are formed between said first grit particles;
   filling said spaces between said first grit particles with a plurality of second grit particles, wherein said second grit particles are smaller than the first grit particles, wherein a mixture of said second grit particles to said first grit particles comprises from about 75% to about 98% of said mixture of particles;
   enveloping said second grit particles with a matrix material; and
   surrounding each of said first grit particles with said matrix material exposing a portion of said first grit particles above said matrix material and said second grit particles.
19. The process of embodiment 18, further comprising:
   spacing said first grit particles apart, wherein said spacing is configured to protect said matrix material from wear by an abradable rub.
20. The process of embodiment 19, further comprising:
   distributing a cutting load from individual highly loaded first grit particles to adjacent first grit particles, thereby reducing stress at the matrix composite material.
21. The process of embodiment 19, wherein said matrix material and said second grit particles combined comprise a strength and abrasion resistance greater than said matrix material alone.
22. The process of embodiment 19, further comprising applying a base layer to said blade tip prior to applying said adhesion layer.

## Claims

1. An abrasive coating for a substrate, comprising:
a plurality of first grit particles adapted to be placed on a top surface of said substrate, wherein said plurality of first grit particles are spaced to provide channels for at least one of the removal of cut chips and rub debris and the reduction of heat generation;
a plurality of second grit particles placed between each of said plurality of first grit particles, said second grit particles having a nominal size smaller than said first grit particles, wherein a mixture of said second grit particles to said first grit particles comprises from about 75-98% of said mixture of particles wherein said plurality of second grit particles are configured in a single layer or multiple layers wherein said plurality of second grit particles comprise a total combined height of 10 to 60% of that of the first grit particles, and
a matrix material bonded to said top surface; said matrix material envelops said second grit particles and said matrix material bonds to and partially surrounds said first grit particles, wherein said first grit particles extend above said matrix material and said second grit particles relative to said top surface.

2. The coating according to claim 1, further comprising:
an adhesion layer coupled to said top surface, wherein said adhesion layer is configured to adhere said first grit particles to said top surface.

3. A turbine engine component comprising:
an airfoil having a tip;
a composite abrasive coating bonded to said tip;
said composite abrasive coating comprising an adhesion layer bonded to said tip;
a layer of first grit particles bonded to said adhesion layer;
a plurality of second grit particles dispersed around said first grit particles, said second grit particles being smaller than said first grit particles, wherein a mixture of said second grit particles to said first grit particles comprises from about 75% to about 98% of the total number of particles; and
said second grit particles enveloped in a matrix material surrounding an unexposed portion of said first grit particles; said matrix material coupled to said adhesion layer.

4. The coating or component according to any one of the preceding claims, wherein said first grit particles comprise a cubic boron nitride material, coated silicon carbide (SiC), or another hard ceramic phase, and/or
wherein said matrix material comprises a matrix formed from at least one of Ni, Co and MCrAlY, wherein M is Ni or Co, and/or
wherein said second grit particles are selected from the group consisting of alumina, silicon nitride, cubic boron nitride.

5. The coating or component according to any one of the preceding claims, wherein said adhesion layer comprises the same material as said matrix material.

6. The coating or turbine engine component according to any one of the preceding claims, wherein said first grit particles are sized from about 0.04 to about 1.00 millimeters, and/or
wherein said second grit particles are sized from 0.004 to about 0.1 millimeters, and/or
wherein a diameter of said first grit particles are 10 to 1 the size of a diameter of said second grit particles (preferably wherein said second grit particles are about one tenth of the nominal size of the first grit particles).

7. The coating or turbine engine component according to any one of the preceding claims, wherein said matrix material and said second grit particles are configured to distribute a cutting load from individual highly loaded first grit particles to adjacent first grit particles, thereby reducing stress at the matrix material.

8. The coating or turbine engine system according to any one of the preceding claims, wherein each one of said first grit particles are configured with grit spacing configured to protect said matrix material from wear by an abradable rub.

9. The coating or turbine engine system according to any one of the preceding claims, further comprising:
at least one channel formed between said first grit particles, said channels having a width of 1 -3 diameters of said first grit particles, preferably
wherein said channel is located between said first grit particles that are about 40-90 percent recessed below a total height of said first grit particles, and/or
wherein said channel comprises a composite of said matrix material and said second grit particles.

10. The turbine engine system according to claim 9,
wherein said channel comprises a composite having a strength and abrasion resistance greater than a strength and abrasion of said matrix alone, said channel configured to provide support and bonding strength for said first grit particles.

11. A process for coating a turbine engine airfoil with an abrasive, said process comprising:
applying an adhesion layer onto a tip of said airfoil;
adhering a plurality of first grit particles to said adhesion layer, wherein spaces are formed between said first grit particles;
filling said spaces between said first grit particles with a plurality of second grit particles, wherein said second grit particles are smaller than the first grit particles, wherein a mixture of said second grit particles to said first grit particles comprises from about 75% to about 98% of said mixture of particles;
enveloping said second grit particles with a matrix material; and
surrounding each of said first grit particles with said matrix material exposing a portion of said first grit particles above said matrix material and said second grit particles.

12. The process of claim 11, further comprising:
spacing said first grit particles apart, wherein said spacing is configured to protect said matrix material from wear by an abradable rub.

13. The process of claim 11 or claim 12, further comprising:
distributing a cutting load from individual highly loaded first grit particles to adjacent first grit particles, thereby reducing stress at the matrix composite material.

14. The process of any one of claims 11 to 13,
wherein said matrix material and said second grit particles combined comprise a strength and abrasion resistance greater than said matrix material alone.

15. The process of any one of claims 11 to 14, further comprising applying a base layer to said blade tip prior to applying said adhesion layer.
